# EUROPÄISCHE PATENTANMELDUNG

(11) **EP 4 768 335 A1**
(43) Veröffentlichungstag der Anmeldung: **01.07.2026**
(21) Anmeldenummer: 25223258.2
(22) Anmeldetag: 15.12.2025
(51) Int. Cl.: B60P 1/43, B66F 9/06, G06Q 10/087, B65G 1/04

(54) **MOBILER KOMMISSIONIERROBOTER ZUR AUFNAHME EINES ROLLWAGENS**

(30) Priorität: 31.12.2024 DE 102024004443; 25.02.2025 DE 102025107018
(71) Anmelder: STILL GmbH, 22113 Hamburg (DE); Linde Material Handling GmbH, 63743 Aschaffenburg (DE)
(72) Erfinder: Krumbholz, Peter, 63869 Jakobsthal (DE); Schrage, Tom-Luca, 22049 Hamburg (DE)
(74) Vertreter: Patentship Patentanwaltgesellschaft

(57) **Zusammenfassung**

Die Erfindung betrifft einen mobilen Kommissionierroboter (1) zum vollautomatischen Kommissionieren von Objekten in einem Lager umfassend ein Fahrwerk zum Abstützen und Verfahren des mobilen Kommissionierroboters (1) auf einer Fahrbahn (FB), eine Lastaufnahmevorrichtung (2) zur Aufnahme mindestens eines Ladungsträgers (3) und einen Lasthandhabungsmanipulator (5). Der mobile Kommissionierroboter (1) weist einen Fahrzeugrahmen (10) auf, der mit dem Fahrwerk versehen ist, wobei an dem Fahrzeugrahmen (10) eine Rollwagenaufnahme (40) als Lastaufnahmevorrichtung (2) angeordnet ist, die ausgebildet ist, einen als Rollwagen (41) ausgebildeten Ladungsträger (3) aufzunehmen, wobei die Rollwagenaufnahme (40) eine Plattform (45) und eine klappbare Rampe (46) aufweist, wobei die Rollwagenaufnahme (40) derart ausgebildet ist, dass der Rollwagen (41) zur Aufnahme auf dem mobilen Kommissionierroboter (1) auf Rollwagen-Rollen (42) von der Fahrbahn (FB) über die Rampe (46) und die Plattform (45) gerollt werden kann und zur Abgabe vom mobilen Kommissionierroboter (1) auf den Rollwagen-Rollen (42) von der Plattform (45) über die Rampe (46) auf die Fahrbahn (FB) gerollt werden kann.

## Beschreibung

Die Erfindung betrifft einen mobilen Kommissionierroboter zum vollautomatischen Kommissionieren von Objekten in einem Lager umfassend ein Fahrwerk zum Abstützen und Verfahren des mobilen Kommissionierroboters auf einer Fahrbahn, eine Lastaufnahmevorrichtung zur Aufnahme mindestens eines Ladungsträgers und einen Lasthandhabungsmanipulator.

Mobile Kommissionierroboter werden zum vollautomatischen Kommissionieren von Objekten, beispielsweise Waren, in einem Lager verwendet, wobei die Objekte mit dem Lasthandhabungsmanipulator von einem seitlich neben dem Kommissionierroboter befindlichen Quellort, beispielsweise einer Quellpalette, entnommen und auf einen am Kommissionierroboter mitgeführten Ladungsträger als Zielort abgelegt werden. Der Quellort kann ein Regalfach eines seitlich neben dem Kommissionierroboter befindlichen Regals des Lagers oder auch eine seitlich neben dem Kommissionierroboter befindliche Palette des Lagers sein. Die Integration der autonomen Pick-Funktion der Objekte von dem Quellort zu dem Zielort und der Transportfunktion des den Zielort der Objekte darstellenden Ladungsträgers in einem einzelnen Fahrzeug verringert die Anzahl der für die vollautomatische Kommissionierung erforderlichen Fahrzeuge im Lager und ermöglicht kurze Prozesszeiten, da der mobile Kommissionierroboter nicht auf ein separates Transportfahrzug warten muss, das den Ladungsträger transportiert, auf dem der mobile Kommissionierroboter die Objekte ablegen soll.

Es ist bekannt, mobile Kommissionierroboter auf der Basis eines autonom und somit fahrerlos betriebenen Flurförderzeugs auszubilden, indem das Flurförderzeug für die Handhabung der Objekte mit einem Lasthandhabungsmanipulator versehen wird. Mit dem Lasthandhabungsmanipulator kann ein außerhalb der Grundfläche des Flurförderzeugs an einem seitlich neben dem Flurförderzeug befindlichen Quellort befindliches Objekt aufgenommen und auf den auf dem Flurförderzeugs mitgeführten Ladungsträger als Zielort abgelegt werden.

Bei der vollautomatischen Kommissionierung von Objekten von einer Quellpalette auf einen an dem Kommissionierroboter mitgeführten Ladungsträger sind eine Reihe von Kundenanforderungen zu beachten. Insbesondere soll der mobile Kommissionierroboter kompakte Abmessungen in Fahrzeuglängsrichtung und in Fahrzeugquerrichtung aufweisen, wodurch die Navigation und die Fahrbewegungen des mobilen Kommissionierroboters in einem Lagerhaus erleichert werden. Ein mobiler Kommissionierroboter mit kompakten Abmessungen kann ein Gangwechsel oder ein Wechsel der Seite innerhalb eines Regalgangs des Regals leichter durchgeführt werden ohne zeitaufwändige Rangierbewegungen zu erfordern.

Bekannte mobile Kommissionierroboter weisen als Lastaufnahmevorrichtung zur Aufnahme mindestens eines Ladungsträgers eine anhebbare und absenkbare Lastgabel auf, mit der ein als Palette ausgebildeter Ladungsträger für den Kommissionierprozess aufgenommen werden kann. Ein derartiger mobile Kommissionierroboter weist jedoch aufgrund der Hubfunktion für die als Lastgabel ausgebildete Lastaufnahmevorrichtung einen hohen Bauaufwand auf.

Der vorliegenden Erfindung liegt die Aufgabe zugrunde, einen mobilen Kommissionierroboter zur Verfügung zu stellen, der hinsichtlich des Bauaufwandes vereinfacht ist.

Diese Aufgabe wird erfindungsgemäß dadurch gelöst, dass der mobile Kommissionierroboter einen Fahrzeugrahmen aufweist, der mit dem Fahrwerk versehen ist, wobei an dem Fahrzeugrahmen eine Rollwagenaufnahme als Lastaufnahmevorrichtung angeordnet ist, die ausgebildet ist, einen als Rollwagen ausgebildeten Ladungsträger aufzunehmen, wobei die Rollwagenaufnahme eine Plattform und eine klappbare Rampe aufweist, wobei die Rollwagenaufnahme derart ausgebildet ist, dass der Rollwagen zur Aufnahme auf dem mobilen Kommissionierroboter auf Rollwagen-Rollen von der Fahrbahn über die Rampe und die Plattform gerollt werden kann und zur Abgabe vom mobilen Kommissionierroboter auf den Rollwagen-Rollen von der Plattform über die Rampe auf die Fahrbahn gerollt werden kann.

Der erfindungsgemäßes mobile Kommissionierroboter ist mit einer Rollwagenaufnahme als Lastaufnahmevorrichtung versehen. Die Rollwagenaufnahme weist eine Plattform und eine klappbare Rampe auf. Der Rollwagen kann zu Beginn des Kommissionierprozesses zur Aufnahme auf dem mobilen Kommissionierroboter auf Rollwagen-Rollen von der Fahrbahn über die Rampe auf die Plattform gerollt werden und am Ende des Kommissionierprozesses zur Abgabe vom mobilen Kommissionierroboter auf den Rollwagen-Rollen von der Plattform über die Rampe auf die Fahrbahn gerollt werden. Die Abgabe des Rollwagens am Ende des Kommissionierprozesses kann zur Qualitätskontrolle des mit den Objekten beladenen Rollwagens, oder zur Ladungssicherung des mit den Objekten beladenen Rollwagens oder direkt an einem Versandtor erfolgen. Durch die Rampe ist somit keine Hubfunktion für die Lastaufnahmevorrichtung erforderlich, wodurch sich der Bauaufwand des erfindungsgemäßen mobilen Kommissionierroboters verringert lässt.

Gemäß einer vorteilhaften Ausgestaltungsform der Erfindung ist die Rampe am Fahrzeugheck des mobilen Kommissionierroboters um eine in Fahrzeugquerrichtung verlaufende Schwenkachse klappbar angeordnet. Hierdurch kann die Rampe in einfacher Weise zur Aufnahme und Abgabe des Rollwagens heruntergeklappt werden und bei aufgenommenem Rollwagen hochgeklappt werden.

Gemäß einer vorteilhaften Ausgestaltungsform der Erfindung ist die Rampe an der Plattform klappbar angeordnet. Die klappbare Anordnung der Rampe an der Plattform führ zu einem geringen Bauaufwand für die Rollwagenaufnahme.

Gemäß einer vorteilhaften Ausgestaltungsform der Erfindung weist das Fahrwerk ein Antriebsrad, insbesondere ein lenkbares Antriebsrad, und zwei in Fahrzeugquerrichtung voneinander beabstandet angeordnete Lasträder auf, die an Radarmen des Fahrzeugrahmens angeordnet sind. Hierdurch wird ein wendiger mobiler Kommissionierroboter mit einem kurzen Radstand ermöglicht.

Gemäß einer vorteilhaften Ausgestaltungsform der Erfindung ist die Rollwagenaufnahme mit einer Positionierreinrichtung versehen, die ausgebildet ist, eine Bodenplatte des Rollwagens, an der die Rollwagen-Rollen des Rollwagens angeordnet sind, im aufgenommenen Zustand des Rollwagens in Fahrzeuglängsrichtung des mobilen Kommissionierroboters und/oder in Fahrzeugquerrichtung des mobilen Kommissionierroboters zu sichern. Hierdurch ist eine exakte und wiederholbare Positionierung des auf der Plattform der Rollwagenaufnahme aufgenommenen Rollwagens möglich. Mit einer derartigen Positionierreinrichtung ist keine umfangreiche Überwachung und Vermessung des aufgenommenen Rollwagens nötig, wodurch die Zykluszeit im Kommissionierbetrieb des mobilen Kommissionierroboters verringert werden kann und die Komplexität und der Bauaufwand des mobilen Kommissionierroboters verringert werden kann.

Gemäß einer vorteilhaften Ausgestaltungsform der Erfindung weist die Positioniereinrichtung Federelemente auf, die ausgebildet sind, im aufgenommenen Zustand des Rollwagens mit gegenüberliegenden Seitenwänden der Bodenplatte des Rollwagens in Eingriff zu gelangen. Hierdurch kann in einfacher Weise und mit geringem Bauaufwand der auf der Plattform aufgenommene Rollwagen in Fahrzeugquerrichtung des mobilen Kommissionierroboters positioniert und gesichert werden.

Gemäß einer vorteilhaften Ausgestaltungsform der Erfindung sind die Federelemente als Formfedern, insbesondere Federzungen, ausgebildet, die an gegenüberliegenden Seitenbereichen der Plattform der Rollwagenaufnahme angeordnet sind. Mit derartigen Formfedern kann in einfacher Weise und bei geringem Bauaufwand für die Federelemente der auf der Plattform aufgenommene Rollwagen in Fahrzeugquerrichtung des mobilen Kommissionierroboters positioniert und gesichert werden, wobei weiterhin Toleranzen in den Breitenabmessungen der Bodenplatten von verschiedenen Rollwagen in einfacher Weise ausgeglichen werden können.

Gemäß einer vorteilhaften Ausgestaltungsform der Erfindung weist die Positioniereinrichtung einen Anschlag auf, der ausgebildet ist, im aufgenommenen Zustand des Rollwagens mit einer Vorderwand der Bodenplatte des Rollwagens in Eingriff zu gelangen. Hierdurch kann in einfacher Weise und mit geringem Bauaufwand der auf der Plattform aufgenommene Rollwagen in Fahrzeuglängsrichtung des mobilen Kommissionierroboters positioniert und gesichert werden.

Gemäß einer vorteilhaften Ausgestaltungsform der Erfindung ist der Anschlag in Fahrzeuglängsrichtung des mobilen Kommissionierroboters einstellbar. Hierdurch können in einfacher Weise Montagetoleranzen sowie Toleranzen in den Längenabmessungen der Bodenplatten von verschiedenen Rollwagen in einfacher Weise ausgeglichen werden.

Gemäß einer vorteilhaften Ausgestaltungsform der Erfindung weist die Positioniereinrichtung ein elastisches Anpresselement auf, dass an der Rampe angeordnet ist, wobei das elastische Anpresselement ausgebildet ist, im aufgenommenen Zustand des Rollwagens mit einer Rückwand der Bodenplatte des Rollwagens in Eingriff zu gelangen. Hierdurch kann in einfacher Weise in Verbindung mit dem Anschlag mit geringem Bauaufwand der auf der Plattform aufgenommene Rollwagen in Fahrzeuglängsrichtung des mobilen Kommissionierroboters positioniert und gesichert werden.

Gemäß einer vorteilhaften Ausgestaltungsform der Erfindung ist das elastische Anpresselement in Fahrzeugquerrichtung mittig an der Rampe angeordnet. Rollwagen sind in der Regel mit vier Rollwagen-Rollen versehen, die an den vier Ecken der Bodenplatte angeordnet sind. Die Anordnung des elastischen Anpresselements in Fahrzeugquerrichtung mittig an der Rampe ermöglicht es, dass das elastische Anpresselement beim Hinaufrollen des Rollwagens auf die Rampe und beim Hinabrollen des Rollwagens von der Rampe von den Rollwagen-Rollen umfahren wird.

Gemäß einer vorteilhaften Ausgestaltungsform der Erfindung weist das elastische Anpresselement mindestens eine Anpressfeder auf. Hierdurch wird ein geringer Bauaufwand für das elastische Anpresselement erzielt.

Gemäß einer vorteilhaften Ausgestaltungsform der Erfindung ist die klappbare Rampe zwischen einer heruntergeklappten Ladeposition und einer hochgeklappten Verriegelungsposition klappbar, wobei Verriegelungseinrichtung vorgesehen ist, die die Rampe in der hochgeklappten Verriegelungsposition sichert. Hierdurch kann in einfacher Weise die hochgeklappte Rampe im Betrieb des mobilen Kommissionierroboters gesichert werden.

Gemäß einer vorteilhaften Ausgestaltungsform der Erfindung ist die Verriegelungseinrichtung ausgebildet, in der Verriegelungsposition der Rampe die Bodenplatte des Rollwagens zwischen dem Anschlag und dem elastisches Anpresselement zu verspannen. Hierdurch kann der auf der Plattform aufgenommene Rollwagen in einfacher Weise während des Fahrbetriebs des mobilen Kommissionierroboters gegen ungewünschte Bewegungen gesichert und somit verriegelt werden. Hierdurch wird eine hinreichend gute Positionierung des aufgenommenen Rollwagens im Roboterkoordinatensystem erreicht und während des Kommissionierbetriebs des mobilen Kommissionierroboters sichergestellt, so dass eine Ablage von Objekten auf dem Rollwagen ohne vorherige relative Lokalisierung zwischen Kommissionierroboter und Rollwagen möglich ist.

Gemäß einer vorteilhaften Ausgestaltungsform der Erfindung ist der mobile Kommissionierroboter mit einem von einer Bedienperson betätigbaren Freigabeschaltelement versehen, das mit einer Steuereinrichtung des mobilen Kommissionierroboters in Verbindung steht, wobei die Steuereinrichtung ausgebildet ist, nach Betätigen des Freigabeschaltelements einen neuen Kommissionierauftrag zu starten. Der Bediener kann mit dem Freigabeschaltelement die ordnungsgemäße Entladung des vollen Rollwagens und die Verladung und Sicherung des neuen, leeren Rollwagens quittieren. Das Signal des Freigabeschaltelements kann in der Steuereinrichtung des mobilen Kommissionierroboters als Start-Signal für den neuen Auftrag genutzt werden

Gemäß einer vorteilhaften Ausgestaltungsform der Erfindung ist die Rollwagenaufnahme mit zumindest einem Längsträger an dem Fahrzeugrahmen befestigt, insbesondere auskragend befestigt. Hierdurch kann die Rollwagenaufnahme in einfacher Weise an dem Fahrzeugrahmen befestigt werden. Bevorzugt ist die Rollwagenaufnahme mit zumindest einem Längsträger an dem Fahrzeugrahmen auskragend befestigt, d.h. außerhalb der Radbasis, die von dem Antriebsrad und den Lasträdern gebildet ist, angeordnet. Hierdurch wird bei dem erfindungsgemäßen mobilen Kommissionierroboter ein kurzer Radstand zwischen dem Antriebsrad und den Lasträdern ermöglicht, der eine hohe Wendigkeit und einen kleinen Wendekreis des mobilen Kommissionierroboters ermöglicht.

Gemäß einer vorteilhaften Ausgestaltungsform der Erfindung umfasst der Fahrzeugrahmen ein Batteriefach, in dem eine Energieversorgungseinheit des mobilen Kommissionierroboters angeordnet ist, wobei in Fahrzeuglängsrichtung zwischen dem Batteriefach und der Rollwagenaufnahme an dem Fahrzeugrahmen der Lasthandhabungsmanipulator angeordnet ist. Hierdurch kann in einfacher Weise in Fahrzeuglängsrichtung zwischen dem Batteriefach und der Rollwagenaufnahme der Lasthandhabungsmanipulator angeordnet werden und ein Arbeitsraum für den Lasthandhabungsmanipulator geschaffen werden, um im Kommissionierbetrieb des mobilen Kommissionierroboters Objekte mit dem Lasthandhabungsmanipulator von einem Quellort aufzunehmen und auf dem auf der Rollwagenaufnahme mitgeführten Rollwagen abzulegen.

Gemäß einer vorteilhaften Ausgestaltungsform der Erfindung umfasst der Lasthandhabungsmanipulator ein vertikal angeordnetes Hubgerüst, an dem ein Roboterarm anhebbar und absenkbar angeordnet ist. Bevorzugt ist der Roboterarm mit einer Scara-Kinematik versehen, die mehrere über vertikale Drehachsen gekoppelte übereinander angeordnete Armelemente aufweist. Der Roboteram ist an dem Hubgerüst in vertikaler Richtung anhebbar und absenkbar angeordnet. Hierdurch kann in einem Scara-Roboterarm ein großer Aktionsbereich abgedeckt werden.

Gemäß einer vorteilhaften Ausgestaltungsform der Erfindung ist die Rollwagenaufnahme mit zwei Längsträgern an gegenüberliegenden Seitenwänden des Batteriefachs befestigt, insbesondere mittels Schraubverbindungen. Die Seitenwände des Batteriefachs sind in der Regel sehr stabil und biegesteif ausgeführt, wodurch die Längsträger der Rollwagenaufnahme in einfacher Weise an den Seitenwänden des Batteriefachs befestigt werden können.

Gemäß einer vorteilhaften Ausgestaltungsform der Erfindung ist der mobile Kommissionierroboter im Bereich des Hubgerüstes mit einem Umfeldsensor versehen ist, der eine parallel zur Oberseite der Radarme liegende Überwachungsebene aufweist, wobei die Rollwagenaufnahme und die Längsträger in vertikaler Richtung oberhalb der Überwachungsebene angeordnet sind. Die Längsträger und die Rollwagenaufnahme sind somit in vertikaler Richtung oberhalb der Überwachungsebene des Umfeldsensors, beispielsweise eine Laserscanners, angeordnet. Hierdurch kann der Umfeldsensor in kostengünstiger Weise im Bereich des Hubgerüstes angeordnet werden, bevorzugt in Fahrzeugquerrichtung mittig.

Gemäß einer alternativen und ebenfalls vorteilhaften Ausgestaltungsform der Erfindung ist die Rollwagenaufnahme mit zwei Längsträgern an den Radarmen befestigt, insbesondere mittels Schraubverbindungen. Die Befestigung der Rollwagenaufnahme mit den Längsträgern an den Radarmen führt zu weiteren Vorteilen, da die auskragende Länge der Längsträger verringert werden kann, so dass der Bauaufwand für die Längsträger verringert werden kann.

Gemäß einer vorteilhaften Ausgestaltungsform der Erfindung ist der mobile Kommissionierroboter im Bereich der Rollwagenaufnahme mit einem Umfeldsensor versehen, der eine parallel zur Oberseite der Radarme liegende Überwachungsebene aufweist. Hierdurch wird bei einer Anorndung, bei der die Rollwagenaufnahme mit zwei Längsträger an den Radarmen befestigt ist, in einfacher Weise eine Überwachung des Heckbereichs des mobilen Kommissionierroboters mit dem im Bereich der Rollwagenaufnahme angeordneten Umfeldsensor ermöglicht.

Gemäß einer vorteilhaften Ausgestaltungsform der Erfindung ist der Umfeldsensor in Fahrzeugquerrichtung mittig angeordnet. Hierdurch wird ermöglicht, dass der im Bereich der Rollwagenaufnahme angeordnete Umfeldsensor auch teilweise oberhalb der Plattform angeordnet werden kann, da der Umfeldsensor von den Rollwagen-Rollen des Rollwagens umfahren wird.

Gemäß einer vorteilhaften Ausgestaltungsform der Erfindung ist an der Rollwagenaufnahme eine Abstützrolle oder an den Enden der Längsträger jeweils eine Abstützrolle angeordnet. Die Abstützrolle ist bevorzugt derart angeordnet, dass die Abstützrolle im normalen Fahrbetrieb des Kommissionierroboters auf einer ebenen Fahrbahn nicht auf der Fahrbahn aufsteht und nur in Kontakt mit der Fahrbahn gelangt, wenn diese als Fahrbahnrampe ausgeführt ist. Damit kann das Befahren von steilen Fahrbahnrampen mit dem mobilen Kommissionierroboter ermöglicht werden, beispielsweise beim Verladen des mobilen Kommissionierroboters.

Gemäß einer vorteilhaften Ausgestaltungsform der Erfindung ist an dem Längsträger mindestens eine Verladeöse angeordnet. Hierdurch kann in einfacher Weise eine Lastkette an den Verladeösen eingehängt werden, um den mit der Rollwagenaufnahme versehen Kommissionierroboter zu verladen oder die vom Fahrzeugrahmen demontierte Rollwagenaufnahme zu verladen und zu transportieren.

Die Erfindung betrifft weiterhin ein System umfassend einen erfindungsgemäßen mobilen Kommissionierroboter und mindestens einen Rollwagen, der eine Bodenplatte aufweist, an der Rollwagen-Rollen angeordnet sind.

Die Erfindung weist eine Reihe von Vorteilen auf.

Der erfindungsgemäße Kommissionierroboter bietet die Möglichkeit, eine Kommissionierung von Objekten von einem Quellort auf den auf der Rollwagenaufnahme mitgeführten Rollwagen mit nur einem einzigen Fahrzeug vollständig autonom zu realisieren. Der erfindungsgemäße Kommissionierroboter kann sich autonom bewegen und einen Kommissionierauftrag, bei dem unterschiedliche Objekte von verschiedenen Quellorten auf den am Kommissionierroboter mitgeführten Rollwagen gemäß einem gewünschen Packmuster abgelegt werden, autonom abarbeiten.

Bei dem erfindungsgemäßen Kommissionierroboter ist die Rollwagenaufnahme auskragend und somit außerhalb der Radbasis des Fahrwerks angeordnet. Hierdruch wird ein kurzer Radstand des erfindungsgemäßen Kommissionierroboters in Fahrzeuglängsrichtung ermöglicht, der zu einer hohen Wendigkeit des Kommissionierroboters führt.

Der mobile Kommissionierroboter weist einen einfachen Bauaufwand mit kompakten Fahrzeugabmessungen in Fahrzeuglängsrichtung und Fahrzeugquerrichtung auf.

Mittels der klappbaren Rampe kann ein Rollwagen in einfacher Weise auf die Plattform der Rollwagenaufnahme hinaufgerollt und heruntergerollt werden, beispielsweise von einer Bedienperson, die zu Zwecken der Ladungssicherung und/oder Qualitätssicherung und/oder zum Weitertransport oder Bereitstellung der Rollwagen vorhanden ist. Die von der Plattform und der Rampe gebildete Lastaufnahmevorrichtung benötigt keine Hubfunkton und keinen Hubantrieb.

Der erfindungsgemäße Kommissionierroboter kann durch Anbau der Rollwagenaufnahme in einfacher Weise auf Basis eines autonomen Hochhubwagens gebildet werden, wobei kein Umbau der Umfeldsensoren erforderlich ist, so dass das Safety-System des autonomen Hochchhubwagens erhalten bleibt. Durch eine Demontage der Rollwagenaufnahme kann der mobile Kommissionierroboter in einfacher Weise zu einem autonomen Hochhubwagen zurückgebaut werden.

Weitere Vorteile und Einzelheiten der Erfindung werden beispielhaft anhand des in den schematischen Figuren dargestellten Ausführungsbeispiels näher erläutert.
- Figur 1: einen erfindungsgemäßen mobilen Kommissionierroboter in einer perspektivischen Darstellung,
- Figur 2: einen Ausschnitt der Figur 1 in einer vergrößerten Darstellung,
- Figur 3: den mobilen Kommissionierroboter der Figuren 1 und 2 in einer Seitenansicht,
- Figur 4: die Rollwagenaufnahme des mobilen Kommissionierroboters der Figuren 1 bis 3 in einer vergrößerten Darstellung,
- Figur 5: eine weitere Darstellung der Rollwagenaufnahme des mobilen Kommissionierroboters der Figuren 1 bis 4,
- Figur 6a: einen Ausschnitt des mobilen Kommissionierroboters der Figuren 1 bis 5 mit heruntergeklappter Rampe der Rollwagenaufnahme,
- Figur 6b: einen Ausschnitt des mobilen Kommissionierroboters der Figuren 1 bis 5 mit hochgeklappter Rampe der Rollwagenaufnahme,
- Figur 7: eine weitere Ausführungsform eines erfindungsgemäßen mobilen Kommissionierroboter in einer perspektivischen Darstellung,
- Figur 8: die Rollwagenaufnahme des mobilen Kommissionierroboters der Figur 7 in einem Längsschnitt,
- Figur 9: einen Ausschnitt der Figur 7 in einer vergrößerten Darstellung und
- Figur 10: einen weiteren Ausschnitt der Figur 7 in einer vergrößerten Darstellung.

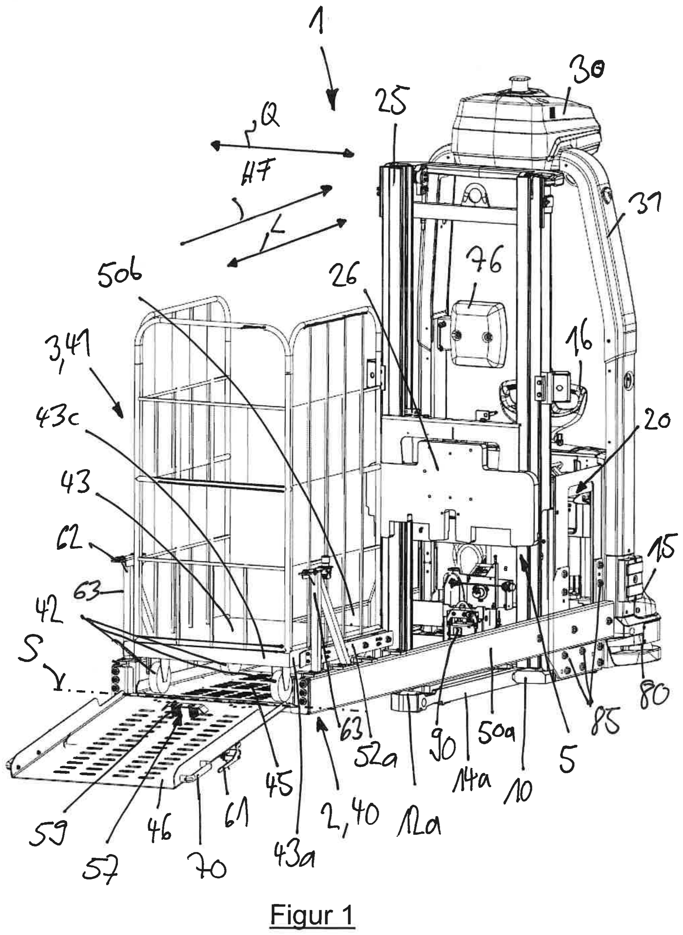

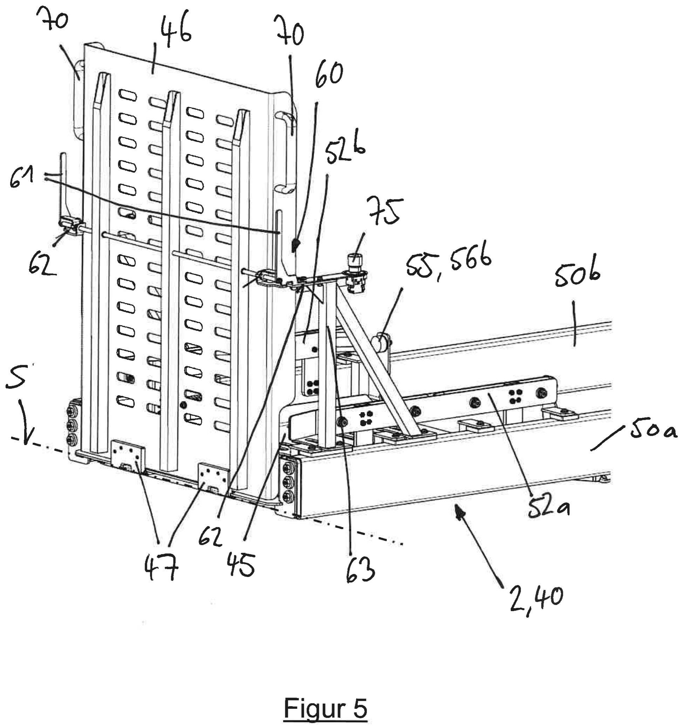

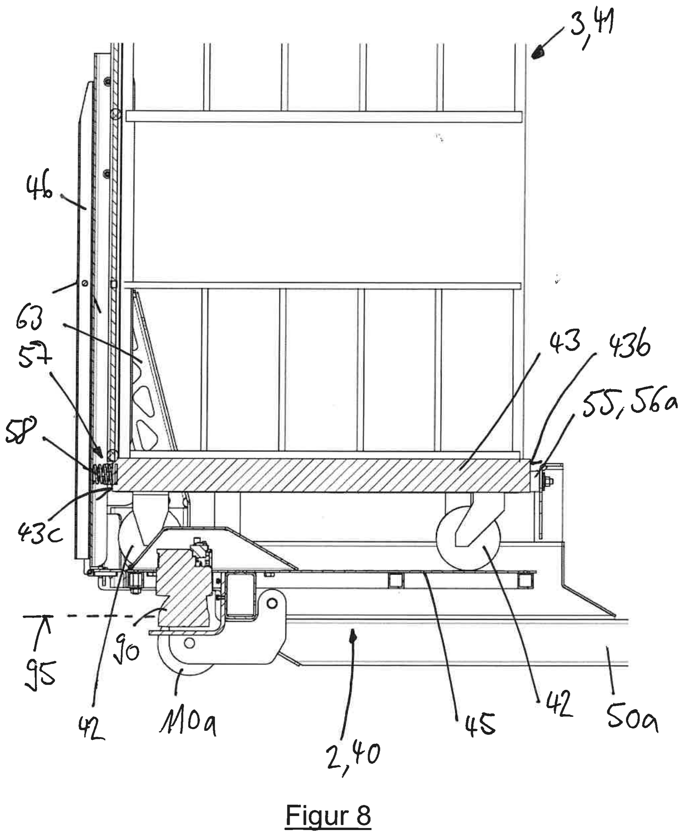

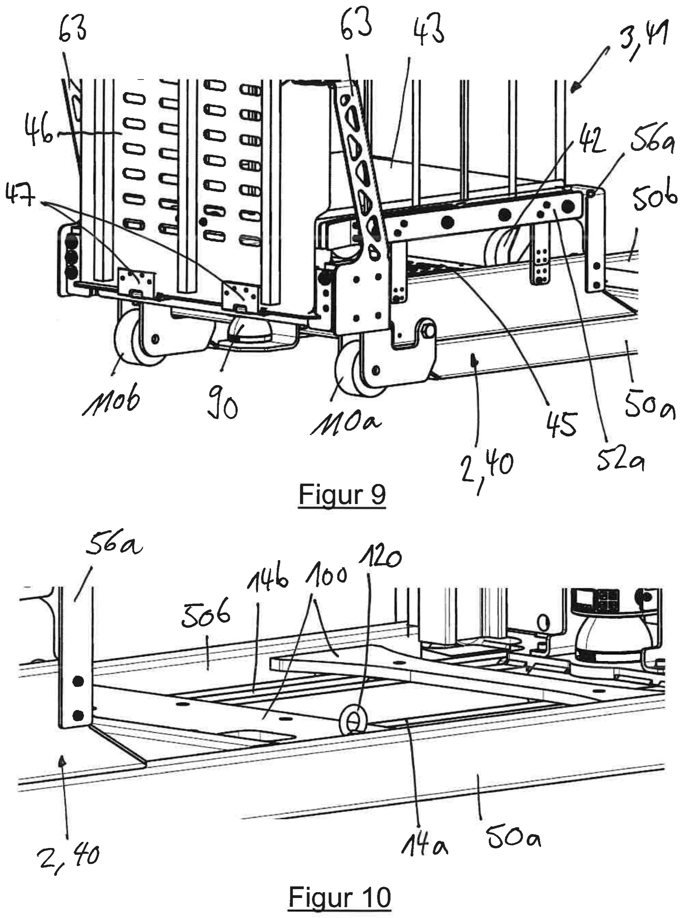

In den Figuren 1 bis 10 ist ein mobiler Kommissionierroboter 1 zum vollautomatischen Kommissionieren von Objekten in einem Lager dargestellt.

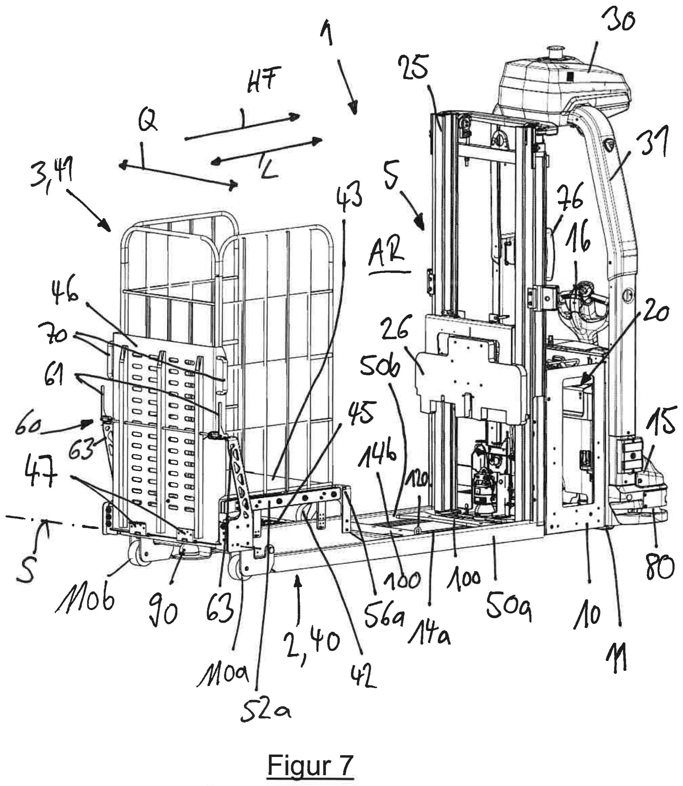

Die im folgenden verwendeten Angaben Frontbereich, Heckbereich, vorne, hinten, links, rechts beziehen sich auf eine in den Figuren 1 und 7 dargestellte Haupftfahrtrichtung HF des mobilen Kommissionierroboters 1.

Der mobiler Kommissionierroboter 1 umfasst ein Fahrwerk, mit dem der Kommissionierroboter 1 auf einer Fahrbahn FB abgestützt ist und auf der Fahrbahn FB frei verfahrbar ist.

Der mobiler Kommissionierroboter 1 umfasst eine Lastaufnahmevorrichtung 2, mit der ein Ladungsträger 3 aufgenommen werden kann.

Der mobile Kommissionierroboter 1 umfasst einen Lasthandhandungmanipulator 5, mit dem im Kommissionierbetrieb des mobilen Kommissionierroboters 1 Objekte von einer seitlich neben dem mobilen Kommissionierroboter 1 stehenden, eine Quellpalette bildenden Palette aufgenommen und auf dem auf der Lastaufnahmevorrichtung 2 befindlichen Ladungsträger 3 abgelegt werden können.

Der mobile Kommissionierroboter 1 weist einen Fahrzeugrahmen 10 auf, an dem in einem Frontbereich ein Antriebsrad 11, insbesondere ein lenkbares Antriebsrad, angeordnet ist und an dem zwei in Fahrzeugqerrichtung Q voneinander beabstandet angeordnete Lasträder 12a, 12b als Fahrwerk angeordnet sind, die in Fahrzeuglängsrichtung L vom Antriebsrad 11 beabstandet sind. Der Fahrzeugrahmen 10 weist zwei in Fahrzeugquerrichtung Q voneinander beabstandet angeordnete Radarme 14a, 14b auf, an deren Endbereich jeweils das Lastrad 12a bzw. 12b angeordnet ist.

An dem Fahrzeugrahmen 10 ist im Frontbereich ein Fahrantrieb, beispielsweise ein elektrischer Fahrantrieb, und ein Lenkantrieb, beispielsweise ein elektrischer Lenkantrieb, für das Antriebsrad 11 angeordnet. Der Fahrantrieb, der Lenkantrieb und das Antriebsrad 11 sind bevorzugt an einem Antriebsteil 15 angeordnet, das an dem Fahrzeugrahmen 10 im Frontbereich angeordnet bzw. ausgebildet ist. An dem Antriebsteil 15 kann für einen manuellen Betrieb des Kommissionierroboters 1 eine Lenkdeichsel 16 vorgesehen sein.

An dem Fahrzeugrahmen 10 ist ein Batteriefach 20 ausgebildet, in dem eine Energieversorgungseinheit 21 angeordnet ist. Die Energieversorgungseinheit 21 kann beispielweise als Traktionsbatterie oder als Brennstoffzellensystem ausgebildet sein.

Das Batteriefach 20 ist im Frontbereich des Kommissionierroboters 1 benachbart zu dem Antriebsrad 11 angeordnet. In Fahrzeuglängsrichtung L zwischen dem Batteriefach 20 und den Lasträdern 12a, 12b ist an dem Fahrzeugrahmen 10 der Lasthandhabungsmanipulator 5 angeordnet.

Der Lasthandhabungsmanipulator 5 umfasst im dargestellten Ausführungsbeispiel ein vertikal angeordnetes Hubgerüst 25, an dem ein Hubschlitten 26 anhebbar und absenkbar angeordnet ist. An dem Hubschlitten 26 kann ein in den Figuren 1 bis 10 nicht näher dargestellter Roboterarm befestigt werden. Der Roboterarm ist bevorzugt als Scara-Roboterarm ausgebildet, der mehrere, in vertikaler Richtung übereinander angeordnete Armelemente aufweist, die mittels vertikaler Drehachse miteinander gekoppelt sind. Das unterste Armelement ist bevorzugt an dem Hubschlitten 26 befestigt. Das oberste Armelement ist mit einem Aufnahmewerkzeug, beispielsweise einem Sauggreifer oder einem Aufwälzgreifer oder einem Adhäsionsgreifer, versehen, mit dem die Objekte aufgenommen werden können.

Im Frontbereich ist der Fahrzeugrahmen 10 mit einer Robotiksteuerung 30 versehen, die einen autonomen oder automatisierten Betrieb des mobilen Kommissionierroboters 1 mitsamt des Lasthandhabungsmanipulators 5 ermöglicht. Hierzu kann an dem Antriebsteil 18 ein bügelartiger Träger 31 angeordnet sein, an dem die Robotiksteuerung 30 für den autonomen oder automatisierten Betrieb des mobilen Kommissionierroboters 1 angeordnet ist.

Bei dem erfindungsgemäßen Kommissionierroboter 1 ist die Lastaufnahmevorrichtung 2 als Rollwagenaufnahme 40 ausgebildet und der Ladungsträger 3 als Rollwagen 41 ausgebildet.

Die Rollwagenaufnahme 40 ist an dem Fahrzeugrahmen 10 angeordnet und ausgebildet, den als Rollwagen 41 ausgebildeten Ladungsträger 3 aufzunehmen.

Die Rollwagenaufnahme 40 weist eine Plattform 45 und eine klappbare Rampe 46 auf.

Die Rollwagenaufnahme 40 ist derart ausgebildet, dass der Rollwagen 41 zur Aufnahme auf dem mobilen Kommissionierroboter 1 auf Rollwagen-Rollen 42 von der Fahrbahn FB über die Rampe 46 und die Plattform 45 gerollt werden kann und zur Abgabe vom mobilen Kommissionierroboter 1 auf den Rollwagen-Rollen 42 von der Plattform 45 über die Rampe 46 auf die Fahrbahn FB gerollt werden kann.

Die Rollwagenaufnahme 40 ist im Heckbereich des Kommissionerroboters 1 angeordnet.

Die Rampe 46 ist am Fahrzeugheck des mobilen Kommissionierroboters 1 um eine in Fahrzeugquerrichtung Q verlaufende Schwenkachse S klappbar angeordnet.

In den dargestellten Ausführungsbeispielen ist die Rampe 46 an der Plattform 45 klappbar angeordnet, beispielsweise mittels Scharnieren 47.

In den dargestellten Ausführungsbeispielen ist die Rollwagenaufnahme 40 mit zumindest einem Längsträger 50a, 50b an dem Fahrzeugrahmen 10 befestigt. In den dargestellten Ausfürungsbeispielen ist die Rollwagenaufnahme 40 mittels zwei Längsträgern 50a, 50b auskragend an dem Fahrzeugrahmen 10 befestigt ist, so dass - in Fahrzeuglängsrichtung L gesehen - die Rollwagenaufnahme 40 außerhalb der Radbasis, d.h. dem Abstand in Fahrzeuglängsrichtung L zwischen dem Antriebsrad 11 und der Achse der Lasträder 12a, 12b, angeordnet ist.

In Fahrzeuglängsrichtung L zwischen dem Batteriefach 20 und der Rollwagenaufnahme 40 ist an dem Fahrzeugrahmen 10 der Lasthandhabungsmanipulator 5 angeordnet. Der Bereich in Fahrzeuglängsrichtung L zwischen dem Hubgerüst 25 und der Rollwagenaufnahme 40 ist als Arbeitsraum AR des Roboterarms ausgebildet.

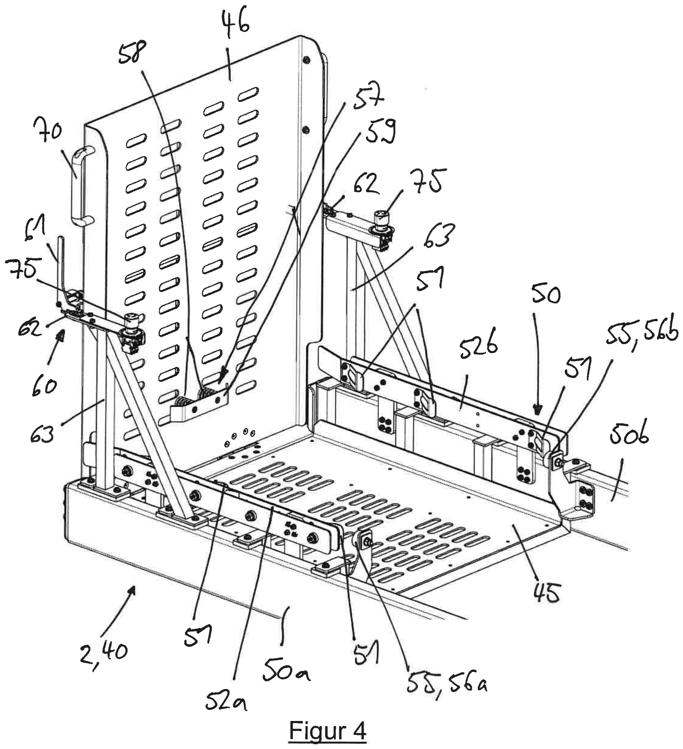

Die Rollwagenaufnahme 40 ist - wie in der Figur 4 näher dargestellt ist - mit einer Positionierreinrichtung 50 versehen, die ausgebildet ist, eine Bodenplatte 43 des Rollwagens 41, an der die Rollwagen-Rollen 42 des Rollwagens 41 angeordnet sind, im aufgenommenen Zustand des Rollwagens 41 in Fahrzeuglängsrichtung L des mobilen Kommissionierroboters 1 und/oder in Fahrzeugquerrichtung Q des mobilen Kommissionierroboters 1 zu sichern.

Die Positioniereinrichtung 50 weist Federelemente 51 auf, die ausgebildet sind, im aufgenommenen Zustand des Rollwagens 1 mit gegenüberliegenden Seitenwänden 43a der Bodenplatte 43 des Rollwagens 41 in Eingriff zu gelangen.

Im dargestellten Ausführungsbeispiels sind die Federelemente 51 als Formfedern, beispielsweise Federzungen, ausgebildet, die an gegenüberliegenden Seitenbereichen der Plattform 45 der Rollwagenaufnahme 40 angeordnet sind.

Im dargestellten Ausführungsbeispiel weist die Rollwagenaufnahme 40 zwei an den Seitenbereichen der Plattform 45 angeordnete Einschubschienen 52a, 52b auf, die in vertikaler Richtung oberhalb der Plattform 45 angeordnet sind und sich in Fahrzeuglängsrichtung L erstrecken. An jeder der Einschubschienen 52a, 52b sind mehrere Federelemente 51 angeordnet, die in Fahrzeuglängsrichtung L voneinander beabstandet sind. Der Rollwagen 41 kann beim Rollen auf die Plattform 45 mit den gegenüberliegenden Seitenwänden 43a der Bodenplatte 43 zwischen die Federelemente 51 an den beiden Einschubschienen 52a, 52b hineingeschoben werden.

Die Positioniereinrichtung 50 weist weiterhin einen Anschlag 55 auf, der ausgebildet ist, im aufgenommenen Zustand des Rollwagens 41 mit einer Vorderwand 43b der Bodenplatte 43 des Rollwagens 41 in Eingriff zu gelangen.

Der Anschlag 45 ist im dargestellten Ausführungsbeispiel von zwei Anschlagelemente 56a, 56b gebildet, die an den Längsträgern 50a bzw. 50b angeordnet und befestigt sind. Die Anschlagelemente 56a, 56b können in Fahrzeuglängsrichtung L des mobilen Kommissionierroboters 1 einstellbar sein.

Die Positioniereinrichtung 50 weist weiterhin ein elastisches Anpresselement 57 auf, dass an der Rampe 46 angeordnet ist. Das elastische Anpresselement 57 ist ausgebildet, im aufgenommenen Zustand des Rollwagens 41 mit einer Rückwand 43c der Bodenplatte 43 des Rollwagens 41 in Eingriff zu gelangen.

Das elastische Anpresselement 57 ist im dargestellten Ausführungsbeispiel in Fahrzeugquerrichtung Q mittig an der Rampe 46 angeordnet.

Im dargestellten Ausführungsbeispiel weist das elastische Anpresselement 57 mindestens eine Anpressfeder 58 auf, an denen eine mit der Rückwand 43c der Bodenplatte 43 des Rollwagens 41 in Eingriff bringbare Andrückplatte 59 befestigt ist.

Die Positioniereinrichtung 50 ermöglicht eine exakte und wiederholgenaue Positionierung des Rollwagens 41 auf der Rollwagenaufnahme 40.

Die beidseitig an den Einschubschienen 52a, 52b angeordneten Federelemente 51 ermöglichen eine Zentrierung des Rollwagens 41 in Fahrzeugquerrichtung Q bereits während des Einschubs. Durch die nachgiebigen Federelemente 51 werden zusätzlich Toleranzen in der Breite des Rollwagens 41 ausgeglichen. Die Federelemente 51 sind bevorzugt als Formfedern ausgeführt, so dass ein Rollwagen 41 aus einer Vorzugsrichtung auf die Plattform 45 eingeschoben werden kann, wobei sich die Federelemente 51 zur Seite hin wegdrücken. Weiterhin sind die Formfedern bevorzugt derart gestaltet, dass der Rollwagen 41 einfach und ohne sich zu verhaken wieder von der Plattform 45 ausgezogen werden kann. Entsprechende Bereiche an den Federelementen 51 sind hierzu bevorzugt mit Winkeln und Rundungen ausgestattet.

Eine vordere Positionierung des Rollwagens 41 auf der Plattform 45 wird durch die Anschlagelemente 56a, 56b erzielt. Die Anschlagelemente 56a, 56b können in Fahrzeuglängsrichtung L einstellbar angebracht werden, um so Montagetoleranzen auszugleichen. Von dem an der Rampe 46 angebrachten elastischen Anpresselement 57 wird der auf der Plattform 45 stehende Rollwagen 41 zur exakten Positionierung in Fahrzeuglängsrichtung L gegen die vorderen Anschlagelemente 56a, 56b gedrückt. Das elastische Anpresselement 57 ist in Fahrzeugquerrichtung Q mittig an der Rampe 46 angeordnet, so dass das elastische Anpresselement 57 während des Auf- und Abschiebens des Rollwagens 41 von den Rollwagen-Rollen 42 des Rollwagens 41 links und rechts umfahren wird.

Die Positioniereinrichtung 50 ermöglicht mit den Federelemente 51 an den beiden Seiten, den Anschlagelementen 56a, 56b und dem elastischen Anpresselement 57 an der Rampe 46 weiterhin einen Toleranzausgleich der Rollwagen 41 hinsichtlich der Breite und der Länge der Bodenplatte 43 des Rollwagens 41.

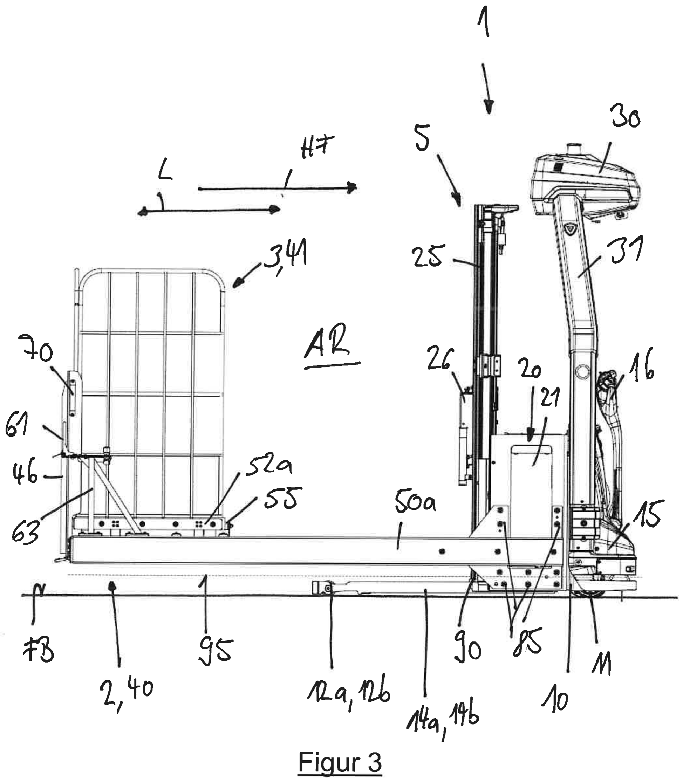

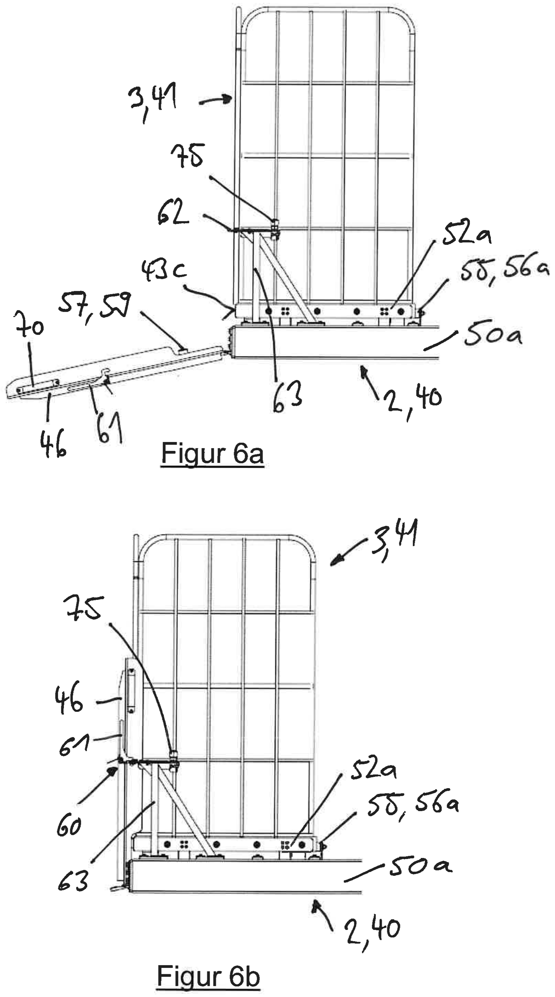

Die Rampe 46 ist zwischen einer heruntergeklappten Ladeposition, die in den Figuren 1 und 6a dargestellt ist, und einer hochgeklappten Verriegelungsposition klappbar, die in den Figuren 3, 4, 5, 6b, 7, 8 und 9 dargestellt ist.

An der Rollwagenaufnahme 40 ist eine Verriegelungseinrichtung 60 vorgesehen, die die Rampe 46 in der hochgeklappten Verriegelungsposition sichert.

Im dargestellten Ausführungsbeispielen umfasst die Verriegelungseinrichtung 60 mindestens einen an der Rampe 46 angeordneten verschwenkbaren Verriegelungshebel 61, der mit einer Verriegelungslasche 62 zusammenwirkt, die an einem an dem Längsträger 50a bzw. 50b befestigten Halter 63 angeordnet ist.

Die Verriegelungseinrichtung 60 ist ausgebildet, in der Verriegelungsposition der Rampe 46 die Bodenplatte 43 des Rollwagens 41 zwischen dem Anschlag 55 und dem elastisches Anpresselement 57 zu verspannen.

Die Rampe 46 mit der Verriegelungseinrichtung 60 ermöglicht eine Verriegelung und Sicherung des auf der Plattform 45 stehenden Rollwagens 41 während des Betriebs des Kommissionierroboters 1.

Die klappbare Rampe 46 lässt sich in der hochgeklappten Verriegelungsposition mit der Verriegelungseinrichtung 60 verriegeln. Vor Erreichen der Verriegelungsposition der Rampe 46 kommt das elastische Anpresselement 57 der Rampe 46 mit der Rückwand 43c der Bodenplatte 43 des Rollwagens 41 in Kontakt. Bis zum Erreichen der Verriegelungsposition der Rampe 46 bei betätigter Verriegelungseinrichtung 60 ist eine für das spalt- und verdrehungsfreie Anpressen an die vorderen Anschlagelemente 56a, 56b ausreichende Kraft erzeugt. Auf diese Weise ist der auf der Plattform 45 stehende Rollwagen 41 verriegelt und kann während des Kommissionierprozesses auch bei dynamischen Fahrmanövern des Kommissionierroboters 1 nicht herunterfallen oder verrutschen. Hierdurch wird eine hinreichend gute Positionierung des auf der Plattform 45 befindlichen Rollwagens 41 im Roboterkoordinatensystem erreicht, so dass eine Ablage von Objekten auf dem Rollwagen 41 ohne vorherige relative Lokalisierung zwischen Kommissionierroboter 1 und aufgenommenen Rollwagen 41 möglich ist.

Im dargestellten Ausführungsbeispiel ist die Rampe 46 manuell von einer Bedienperson klappbar. Hierfür ist an der Rampe 46 mindestens ein Handgriff 70 angeordnet.

Im dargestellten Ausführungsbeispiel ist der Verriegelungshebel 61 manuell von einer Bedienperson betätigbar.

Der mobile Kommissionierroboter 1 ist mit einem von einer Bedienperson betätigbaren Freigabeschaltelement 75 versehen, das mit einer Steuereinrichtung des mobilen Kommissionierroboters 1 in Verbindung steht. Die Steuereinrichtung des Kommissionierroboters 1 ist ausgebildet, nach Betätigen des Freigabeschaltelements 75 einen neuen Kommissionierauftrag zu starten.

Mit dem Freigabeschaltelement 75 kann die Bedienperson die ordnungsgemäße Entladung eines vollen Rollwagens 41 und die Verladung und Sicherung des neuen, leeren Rollwagens 41 quittieren. Dieses Signal des Freigabeschaltelements 75 kann in der Steuereinrichtung des Kommissionierroboters 1 als Start-Signal für einen neuen Kommissionierauftrag genutzt werden.

In dem Ausführungsbeispiel der Figuren 1 bis 6 ist das Freigabeschaltelement 75 an der Rollwagenaufnahme 40 angeordnet. Alternativ kann das Freigabeschaltelement 75 als Funktion in einem Bediendisplay 76 des Kommissionierroboters 1 integriert werden.

Zur Absicherung des Umfelds des mobilen Kommissionierroboters 1 ist der mobile Kommissionierroboter 1 im Frontbereich mit zwei in Fahrzeugquerrichtung Q beabstandet angeordneten Umfeldsensoren 80 versehen. Die Umfeldsensoren 80 sind beispielsweise als Laserscanner ausgebildet. In den Figuren ist lediglich der an der rechten Fahrzeugseite angeordnete Umfeldsensor 80 dargestellt. An der linken Fahrzeugseite ist ein entsprechender Umfeldsensor angeordnet.

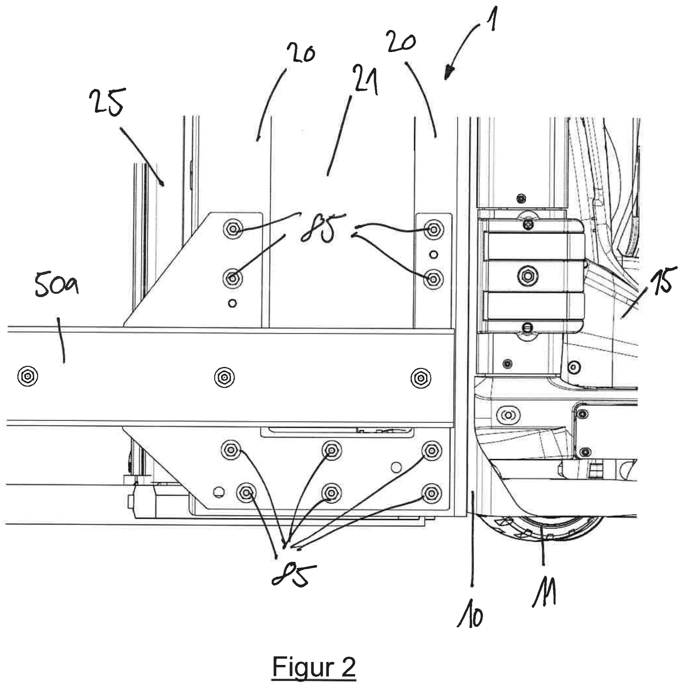

In dem Ausführungsbeispiel der Figuren 1 bis 7 ist die Rollwagenaufnahme 40 mit den zwei Längsträgern 50a, 50b an gegenüberliegenden Seitenwänden des Batteriefachs 20 befestigt. Im dargestellten Ausführungsbeispiel sind hierzu - wie in der Figur 2 näher dargestellt ist - mehrere Schraubverbindungen 85 vorgesehen.

In dem Ausführungsbeispiel der Figuren 1 bis 7 ist der Kommissionierroboter 1 zur Absicherung des Umfelds im Bereich des Hubgerüstes 25 mit einem Umfeldsensor 90 versehen, der eine parallel zur Oberseite der Radarme 14a, 14b und oberhalb der Radarme 14a, 14b angeordnete Überwachungsebene 95 aufweist. Der Umfeldsensor 90 ist beispielsweise als Laserscanner ausgebildet. Die Rollwagenaufnahme 40 und die Längsträger 50a, 50b sind in dem Ausführungsbeispiel der Figuren 1 bis 7 in vertikaler Richtung oberhalb der Überwachungsebene 95 des Umfeldsensors 90 angeordnet.

Der Umfeldsensor 90 ist bevorzugt in Fahrzeugquerrichtung Q mittig angeordnet.

In dem Ausführungsbeispiel der Figuren 1 bis 7 erfolgt die Anbindung der Rollwagenaufnahme 40 am Batteriefach 20 des Kommissionierroboters 1.

Bevorzugt sind in den Seitenwänden des Batteriefachs 30 Aufnahmebohrungen, beispielsweise Gewindebohrungen, für die Schraubverbindungen 85 vorgesehen, so dass eine kostengünstige Befestigung der Längsträger 50, 50b und der Rollwagenaufnahme 40 am Fahrzeugrahmen 10 ermöglicht wird. Die Längsträger 50a, 50b sind bevorzugt an den Fahrzeugaußenseiten der Seitenwände des Batteriefachs 20 angebracht, ohne die Fahrzeug-Kontur zu verbreitern. Die Längsträger 50a, 50b weisen hierzu bevorzugt eine flache und hohe auf den vorhandenen Lastfall optimierte Querschnittsform auf, die innerhalb der im Frontbereich angeordneten Umfeldsensoren 80 bleibt.

Die beiden Längsträger 50a, 50b sind in Fahrzeuglängsrichtung L vor dem Umfeldsensor 90 außen im Bereich des Batteriefachs 20 angebracht und verlaufen über ihre gesamte Länge nach hinten in vertikaler Richtung oberhalb der Überwachungsebene 95 des Umfeldsensors 90. Der Umfeldsensors 90 ist bevorzugt zwischen den Mastprofilen des Hubmastes 25 und zwischen den beiden Radarmen 14a, 14b angeordnet und spannt die Überwachungsebene 95 oberhalb der Radarme 14a, 14b auf. Diese Überwachungsebene 95 wird an keiner Stelle durch die Rollwagenaufnahme 40, den auf der Rollwagenaufnahme 40 befindlichen Rollwagen 41 und die Längsträger 50a, 50b geschnitten.

In dem Ausführungsbeispiel der Figuren 7 bis 10 ist die Rollwagenaufnahme 40 mit den zwei Längsträgern 50a, 50b an den Radarmen 14a, 14b befestigt.

Die zwei Längsträgern 50a, 50b sind hierzu mit Quersterben 100 versehen, die auf die Radarme 14a, 14b aufgelegt und an den Radarmen 14a, 14b befestigt werden können, beispielsweise mittels Schraubverbindungen.

In dem Ausführungsbeispiel der Figuren 7 bis 10 ist der mobile Kommissionierroboter 1 im Bereich der Rollwagenaufnahme 40 mit einem Umfeldsensor 90 versehen, der eine parallel zur Oberseite der Radarme 14a, 14b liegende Überwachungsebene 95 aufweist.

Der Umfeldsensor 90 ist in Fahrzeugquerrichtung Q mittig am hinteren Endbereich der Rollwagenaufnahme 40 angeordnet.

In dem Ausführungsbeispiel der Figuren 7 bis 10 ist im Vergleich zu dem Ausführungsbeispiel des Figuren 1 bis 6 der Umfeldsensor 90 weiter in Fahrzeuglängsrichtung L nach hinten unter die Rollwagenaufnahme 40 gezogen.

Im dargestellten Ausführungsbeispiel der Figuren 7 bis 10 nutzt der in Fahrzeugquerrichtung Q mittig angeordnete Umfeldsensor 90 teilweise Bauraum oberhalb der Plattform 45 der Rollwagenaufnahme 40, auf der der Rollwagen 41 mit den Rollwagenrollen 42 aufsteht.

Das Ausführungsbeispiel der Figuren 7 bis 10 ermöglicht es, die Überwachungsebene 95 im Vergleich zum Ausführungsbeispiel der Figuren 1 bis 6 abzusenken und die Plattform 45 der Rollwagenaufnahme 40 tiefer anzuordnen. Dadurch weist die Rampe 46 in der heruntergeklappten Stellung eine geringere Steigung auf, wodurch der Rollwagen 41 mit verbesserter Ergonomie für die Bedienperson auf die Plattform 45 hinaufgerollt und herabgerollt werden kann.

Weiterhin ermöglicht die Anordnung des Umfeldsensors 90 an der Rollwagenaufnahme 40 gemäß den Figuren 7 bis 10 die Längsträger 50a, 50b an den Radarmen 14a, 14b anzubinden und zu befestigen. Dadurch verringert sich die auskragende Länge der Längsträger 50a, 50b, wodurch die Längsträger 50a, 50b mit kleineren Querschnitten ausgeführt und dadurch leichter ausgeführt werden können.

In dem Ausführungsbeispiel der Figuren 7 bis 10 sind an den hinteren Enden der Längsträger 50a, 50b jeweils eine Abstützrolle 110a, 110b angeordnet. Die Abstützrollen 110a, 110b sind bevorzugt derart angeordnet, dass die Abstützrollen 110a, 110b im normalen Fahrbetrieb des Kommissionierroboters 1 auf einer ebenen Fahrbahn nicht auf der Fahrbahn aufstehen und nur in Kontakt mit der Fahrbahn gelangen, wenn der Kommissionierroboter 1 eine Fahrbahnrampe befährt. Damit kann das Befahren von steilen Fahrbahnrampen mit dem mobilen Kommissionierroboter 1 ermöglicht werden, beispielsweise beim Verladen des mobilen Kommissionierroboters 1. Beim Befahren einer entsprechend steilen Fahrbahnrampe gelangen die Abstützrollen 110a, 110b in Kontakt mit der Fahrbahn, wodurch der Kommissionierroboter 1 zur Überwindung der Fahrbahnrampe mit dem vorderen Antriebsrad 11 und den beiden Abstützrollen 110a, 110b in Bodenkontakt steht und die Lasträdern 12a, 12b kurzzeitig von der Fahrbahn abheben.

In dem Ausführungsbeispiel der Figuren 7 bis 10 ist an dem Längsträger 50a bzw. 50b mindestens eine Verladeöse 120 angeordnet. Die Verladeöse 120 ist bevorzugt als Ringschraube ausgebildet.

An der Verladeöse 120 kann eine Lastkette eingehängt werden, mit der die vom Kommissionierroboter 1 demontierte Rollwagenaufnahme 40 transportiert und verladen werden kann. Die Verladeösen 120 sind bevorzugt derart an den Längsträgern 50a, 50b der Rollwagenaufnahme 40 angeordnet, dass ein ausbalanciertes Verladen der von den Längsträgern 50a, 50b und der Rollwagenaufnahme 40 gebildet ist.

Bei dem erfindungsgemäßen Kommissionierroboter 1 gemäß den Figuren 1 bis 10 ist eine einfache Aufnahme und eine Abgabe des Rollwagens 41 mittels der klappbaren Rampe 46 möglich.

Eine Bedienperson kann mittels der klappbaren Rampe 46 in einfacher Weise einen leeren Rollwagen 41 zu Beginn eines Kommissionierauftrags auf die Plattform 45 Hinaufrollen und einen beladenen Rollwagen 41 am Ende des Kommissionierauftrags von der Plattform 45 hinabrollen. Vorteilhaft ist hierbei, dass der Rollwagen 41 beim Aufschieben zu Beginn des Kommissionierprozesses leer und damit leicht ist, so dass die Steigung der heruntergeklappten Rampe 46 leicht überwunden werden kann. Der Winkel der heruntergeklappten Rampe 46 ist bevorzugt derart gewählt, dass ein kopflastig bepackter Rollwagen 41 nicht auf der schrägen Ebene der heruntergeklappten Rampe 46 beim Herunterrollen von der Plattform 45 umkippt.

Während der Bedienung wird durch das Öffnen und Herunterklappen der Rampe 46 die Überwachungsebene 95 des Umfeldsensors 90 verletzt, wodurch das Wegfahren des Kommissionierroboters 1 wirksam und sicher verhindert wird. Nach Schließen und Verriegelung der Rampe 46 und sobald die Bedienperson die Überwachungsebene 95 des Umfeldsensors 90 wieder verlassen hat, kann der Kommissionierroboter 1 wieder weiterfahren.

Der erfindungsgemäße Kommissionierroboter 1 kann in einfacher Weise aus einem autonomen Hochhubwagen, der mit den Umfeldsensoren 80, 90 versehen ist, hergestellt werden, in dem der Roboterarm an dem Hubschlitten 26 angeordnet wird und an dem Fahrzeugrahmen 10 die Rollwagenaufnahme 40 mittels der Längsträger 50a, 50b befestigt wird.

Bei dem Kommissionierroboter 1 der Figuren 1 bis 6 wird durch die Anbringung der Längsträger 50a, 50b und der Rollwagenaufnahme 40 oberhalb der Überwachungsebene 95 des Umfeldsensors 90 die Überwachungseben 95 freigelassen, so dass durch Verwendung des Umfeldsensors 90 das Sicherheitskonzept des Hochhubwagens unverändert übernommen und für den Betrieb des Kommissionierroboters 1 verwendet werden kann. Der mobile Kommissionierroboter 1 kann somit modular aus einem autonomen Hochhubwagen hergestellt werden, wobei durch Demontage der Rollwagenaufnahme 40 und der Längsträger 50a, 50b sowie des Roboterarms der Kommissionierroboter 1 zu einem autonomen Hochhubwagen zurückgebaut werden kann.

## Patentansprüche

1. Mobiler Kommissionierroboter (1) zum vollautomatischen Kommissionieren von Objekten in einem Lager umfassend ein Fahrwerk zum Abstützen und Verfahren des mobilen Kommissionierroboters (1) auf einer Fahrbahn (FB), eine Lastaufnahmevorrichtung (2) zur Aufnahme mindestens eines Ladungsträgers (3) und einen Lasthandhabungsmanipulator (5), **dadurch gekennzeichnet, dass** der mobile Kommissionierroboter (1) einen Fahrzeugrahmen (10) aufweist, der mit dem Fahrwerk versehen ist, wobei an dem Fahrzeugrahmen (10) eine Rollwagenaufnahme (40) als Lastaufnahmevorrichtung (2) angeordnet ist, die ausgebildet ist, einen als Rollwagen (41) ausgebildeten Ladungsträger (3) aufzunehmen, wobei die Rollwagenaufnahme (40) eine Plattform (45) und eine klappbare Rampe (46) aufweist, wobei die Rollwagenaufnahme (40) derart ausgebildet ist, dass der Rollwagen (41) zur Aufnahme auf dem mobilen Kommissionierroboter (1) auf Rollwagen-Rollen (42) von der Fahrbahn (FB) über die Rampe (46) und die Plattform (45) gerollt werden kann und zur Abgabe vom mobilen Kommissionierroboter (1) auf den Rollwagen-Rollen (42) von der Plattform (45) über die Rampe (46) auf die Fahrbahn (FB) gerollt werden kann.

2. Mobiler Kommissionierroboter (1) nach Anspruch 1, **dadurch gekennzeichnet, dass** die Rampe (46) am Fahrzeugheck des mobilen Kommissionierroboters (1) um eine in Fahrzeugquerrichtung (Q) verlaufende Schwenkachse (S) klappbar angeordnet ist.

3. Mobiler Kommissionierroboter (1) nach Anspruch 1 oder 2, **dadurch gekennzeichnet, dass** die Rampe (46) an der Plattform (46) klappbar angeordnet ist.

4. Mobiler Kommissionierroboter (1) nach einem der Ansprüche 1 bis 3, **dadurch gekennzeichnet, dass** das Fahrwerk ein Antriebsrad (11), insbesondere ein lenkbares Antriebsrad (11), und zwei in Fahrzeugquerrichtung (Q) voneinander beabstandet angeordnete Lasträder (12a, 12b) aufweist, die an Radarmen (14a, 14b) des Fahrzeugrahmens (10) angeordnet sind.

5. Mobiler Kommissionierroboter (1) nach einem der Ansprüche 1 bis 4, **dadurch gekennzeichnet, dass** die Rollwagenaufnahme (40) mit einer Positionierreinrichtung (50) versehen ist, die ausgebildet ist, eine Bodenplatte (43) des Rollwagens (41), an der die Rollwagen-Rollen (42) des Rollwagens (41) angeordnet sind, im aufgenommenen Zustand des Rollwagens (41) in Fahrzeuglängsrichtung (L) des mobilen Kommissionierroboters (1) und/oder in Fahrzeugquerrichtung (Q) des mobilen Kommissionierroboters (1) zu sichern.

6. Mobiler Kommissionierroboter (1) nach Anspruch 5, **dadurch gekennzeichnet, dass** die Positioniereinrichtung (50) Federelemente (51) aufweist, die ausgebildet sind, im aufgenommenen Zustand des Rollwagens (41) mit gegenüberliegenden Seitenwänden (43a) der Bodenplatte (43) des Rollwagens (41) in Eingriff zu gelangen.

7. Mobiler Kommissionierroboter (1) nach Anspruch 6, **dadurch gekennzeichnet, dass** die Federelemente (51) als Formfedern, insbesondere Federzungen, ausgebildet sind, die an gegenüberliegenden Seitenbereichen der Plattform (45) der Rollwagenaufnahme (40) angeordnet sind.

8. Mobiler Kommissionierroboter (1) nach einem der Ansprüche 5 bis 7, **dadurch gekennzeichnet, dass** die Positioniereinrichtung (50) einen Anschlag (55) aufweist, der ausgebildet ist, im aufgenommenen Zustand des Rollwagens (41) mit einer Vorderwand (43b) der Bodenplatte (43) des Rollwagens (41) in Eingriff zu gelangen.

9. Mobiler Kommissionierroboter (1) nach Anspruch 8, **dadurch gekennzeichnet, dass** der Anschlag (55) in Fahrzeuglängsrichtung (L) des mobilen Kommissionierroboters (1) einstellbar ist.

10. Mobiler Kommissionierroboter (1) nach einem der Ansprüche 5 bis 9, **dadurch gekennzeichnet, dass** die Positioniereinrichtung (55) ein elastisches Anpresselement (57) aufweist, dass an der Rampe (46) angeordnet ist, wobei das elastische Anpresselement (57) ausgebildet ist, im aufgenommenen Zustand des Rollwagens (41) mit einer Rückwand (43c) der Bodenplatte (43) des Rollwagens (41) in Eingriff zu gelangen.

11. Mobiler Kommissionierroboter (1) nach Anspruch 10, **dadurch gekennzeichnet, dass** das elastische Anpresselement (57) in Fahrzeugquerrichtung (Q) mittig an der Rampe (46) angeordnet ist.

12. Mobiler Kommissionierroboter (1) nach Anspruch 10 oder 11, **dadurch gekennzeichnet, dass** das elastische Anpresselement (57) mindestens eine Anpressfeder (58) aufweist.

13. Mobiler Kommissionierroboter (1) nach einem der Ansprüche 1 bis 12, **dadurch gekennzeichnet, dass** die klappbare Rampe (46) zwischen einer heruntergeklappten Ladeposition und einer hochgeklappten Verriegelungsposition klappbar ist, wobei eine Verriegelungseinrichtung (60) vorgesehen ist, die die Rampe (46) in der hochgeklappten Verriegelungsposition sichert.

14. Mobiler Kommissionierroboter (1) nach Anspruch 13, **dadurch gekennzeichnet, dass** die Verriegelungseinrichtung (60) ausgebildet ist, in der Verriegelungsposition der Rampe (46) die Bodenplatte (43) des Rollwagens (41) zwischen dem Anschlag (55) und dem elastisches Anpresselement (57) zu verspannen.

15. Mobiler Kommissionierroboter (1) nach einem der Ansprüche 1 bis 14, **dadurch gekennzeichnet, dass** der mobile Kommissionierroboter (1) mit einem von einer Bedienperson betätigbaren Freigabeschaltelement (75) versehen ist, das mit einer Steuereinrichtung des mobilen Kommissionierroboters (1) in Verbindung steht, wobei die Steuereinrichtung ausgebildet ist, nach Betätigen des Freigabeschaltelements (75) einen neuen Kommissionierauftrag zu starten.

16. Mobiler Kommissionierroboter (1) nach einem der Ansprüche 1 bis 15, **dadurch gekennzeichnet, dass** die Rollwagenaufnahme (40) mit zumindest einem Längsträger (50a; 50b) an dem Fahrzeugrahmen (10) befestigt ist, insbesondere auskragend befestigt ist.

17. Mobiler Kommissionierroboter (1) nach einem der Ansprüche 1 bis 16, **dadurch gekennzeichnet, dass** der Fahrzeugrahmen (10) ein Batteriefach (20) umfasst, in dem eine Energieversorgungseinheit (21) des mobilen Kommissionierroboters (1) angeordnet ist, wobei in Fahrzeuglängsrichtung (L) zwischen dem Batteriefach (20) und der Rollwagenaufnahme (40) an dem Fahrzeugrahmen (10) der Lasthandhabungsmanipulator (5) angeordnet ist.

18. Mobiler Kommissionierroboter (1) nach einem der Ansprüche 1 bis 17, **dadurch gekennzeichnet, dass** der Lasthandhabungsmanipulator (5) ein vertikal angeordnetes Hubgerüst (25) umfasst, an dem ein Roboterarm anhebbar und absenkbar angeordnet ist.

19. Mobiler Kommissionierroboter (1) nach Anspruch 17 oder 18, **dadurch gekennzeichnet, dass** die Rollwagenaufnahme (40) mit zwei Längsträgern (50a, 50b) an gegenüberliegenden Seitenwänden des Batteriefachs (20) befestigt ist, insbesondere mittels Schraubverbindungen (85).

20. Mobiler Kommissionierroboter (1) nach Anspruch 19, **dadurch gekennzeichnet, dass** der mobile Kommissionierroboter (1) im Bereich des Hubgerüstes (25) mit einem Umfeldsensor (90) versehen ist, der eine parallel zur Oberseite der Radarme (14a, 14b) liegende Überwachungsebene (95) aufweist, wobei die Rollwagenaufnahme (40) und die Längsträger (50a, 50b) in vertikaler Richtung oberhalb der Überwachungsebene (95) angeordnet sind.

21. Mobiler Kommissionierroboter (1) nach einem der Ansprüche 4 bis 18, **dadurch gekennzeichnet, dass** die Rollwagenaufnahme (40) mit zwei Längsträgern (50a, 50b) an den Radarmen (14a, 14b) befestigt ist, insbesondere mittels Schraubverbindungen.

22. Mobiler Kommissionierroboter (1) nach Anspruch 21, **dadurch gekennzeichnet, dass** der mobile Kommissionierroboter (1) im Bereich der Rollwagenaufnahme (40) mit einem Umfeldsensor (90) versehen ist, der eine parallel zur Oberseite der Radarme (14a, 14b) liegende Überwachungsebene (95) aufweist.

23. Mobiler Kommissionierroboter (1) nach Anspruch 20 oder 22, **dadurch gekennzeichnet, dass** der Umfeldsensor (90) in Fahrzeugquerrichtung (Q) mittig angeordnet ist.

24. Mobiler Kommissionierroboter (1) nach einem der Ansprüche 1 bis 23, **dadurch gekennzeichnet, dass** an der Rollwagenaufnahme (40) eine Abstützrolle oder an den Enden der Längsträger (50a, 50b) jeweils eine Abstützrolle (110a, 110b) angeordnet ist.

25. Mobiler Kommissionierroboter (1) nach einem der Ansprüche 16 bis 24, **dadurch gekennzeichnet, dass** an dem Längsträger (50a, 50b) mindestens eine Verladeöse (120) angeordnet ist.

26. System umfassend einen mobilen Kommissionierroboter (1) nach einem der vorangegangenen Ansprüche und mindestens einen Rollwagen (41), der eine Bodenplatte (43) aufweist, an der Rollwagen-Rollen (42) angeordnet sind.
